# EUROPEAN PATENT APPLICATION

(11) **EP 4 679 353 A1**
(43) Date of publication of application: **14.01.2026**
(21) Application number: 24766750.4
(22) Date of filing: 07.02.2024
(51) Int. Cl.: G06Q 50/10, H04L 65/40, H04L 67/2869

(54) **INFORMATION PROCESSING APPARATUS, WORK ERROR PREVENTION SYSTEM, INFORMATION PROCESSING METHOD, AND PROGRAM**

(30) Priority: 09.03.2023 JP 2023036303
(71) Applicant: NEC Corporation, 108-8001 Tokyo (JP)
(72) Inventor: SHINADA Naohiro, Tokyo 108-8001 (JP)
(74) Representative: Betten & Resch
(86) International application number: PCT/JP2024/004083
(87) International publication number: WO 2024/185375

(57) **Abstract**

The acquisition unit 81 acquires operation information indicating the content of input operations performed via an input device. The notification unit 82, based on a newly input operation and a reference operation that serves as a preset standard operation, notifies another apparatus of content indicating that a predetermined threshold has been exceeded when the threshold is exceeded. The control unit 83 restricts processing in response to input operations to the input device until an approval instruction is received from the other apparatus when the threshold is exceeded. The control unit 83 then releases restriction on the processing in response to input operations to the input device according to the approval instruction from the other apparatus.

## Description

### Technical Field

The present invention relates to an information processing apparatus, a work error prevention system, an information processing method, and a program that prevent work errors caused by human operations.

### Background Art

Systems that execute processes for preventing work errors and unauthorized operations are known. For example, Patent Literature 1 discloses a technique for verifying work errors.

### Citation List

### Patent Literature

PTL 1: Japanese Unexamined Patent Application Publication No. 2011-170739

### Summary of Invention

### Technical Problem

The system described in Patent Literature 1 compares logs of actual operations executed in a production environment with operation log patterns. Therefore, it is difficult to prevent a work error before the erroneous operation is reflected in the system.

Accordingly, it is an exemplary objective of the present invention is to provide a technique that can prevent work errors caused by human operations in advance.

### Solution to Problem

An information processing apparatus according to the present invention includes: an acquisition unit that acquires operation information indicating content of an input operation performed via an input device; a notification unit that, based on the newly input operation and a reference operation that serves as a preset standard operation, notifies another apparatus of content indicating that a predetermined threshold has been exceeded when the threshold is exceeded; and a control unit that restricts processing in response to input operations to the input device until an approval instruction is received from the other apparatus when the threshold is exceeded, wherein the control unit releases restriction on the processing in response to input operations to the input device according to the approval instruction from the other apparatus.

A work error prevention system according to the present invention includes a first information processing apparatus; and a second information processing apparatus that receives information from the first information processing apparatus, wherein the first information processing apparatus includes: an acquisition unit that acquires operation information indicating content of an input operation performed via an input device; a notification unit that, based on the newly input operation and a reference operation that serves as a preset standard operation, notifies the second information processing apparatus of content indicating that a predetermined threshold has been exceeded when the threshold is exceeded; and a control unit that restricts processing in response to input operations to the input device until an approval instruction is received from the second information processing apparatus when the threshold is exceeded, wherein the control unit releases restriction on the processing in response to input operations to the input device according to the approval instruction from the second information processing apparatus.

An information processing method according to the present invention includes: acquiring operation information indicating content of an input operation performed via an input device; notifying another apparatus of content indicating that a predetermined threshold has been exceeded when the threshold is exceeded, based on the newly input operation and a reference operation that serves as a preset standard operation; restricting processing in response to input operations to the input device until an approval instruction is received from the other apparatus when the threshold is exceeded; and releasing the restriction on processing in response to input operations to the input device according to the approval instruction from the other apparatus.

A program according to the present invention causes a computer to execute: an acquisition process that acquires operation information indicating content of an input operation performed via an input device; a notification process that, based on the newly input operation and a reference operation that serves as a preset standard operation, notifies another apparatus of content indicating that a predetermined threshold has been exceeded when the threshold is exceeded; and a control process that restricts processing in response to input operations to the input device until an approval instruction is received from the other apparatus when the threshold is exceeded, wherein the control process releases the restriction on the processing in response to input operations to the input device according to the approval instruction from the other apparatus.

### Advantageous Effects of Invention

The present invention provides a technique that can prevent work errors caused by human operations in advance.

### Brief Description of Drawings

[FIG. 1] It depicts a block diagram illustrating a configuration example of a work error prevention system according to an example embodiment of the present invention.
[FIG. 2] It depicts an explanatory diagram illustrating an example configuration used in a registration process of reference operations.
[FIG. 3] It depicts a flowchart illustrating an example operation of the registration process of reference operations.
[FIG. 4] It depicts an explanatory diagram illustrating an example configuration used in production work.
[FIG. 5] It depicts a flowchart illustrating an example operation of the acquisition unit in production work.
[FIG. 6] It depicts a flowchart illustrating an example operation of the determination unit in production work.
[FIG. 7] It depicts a flowchart illustrating another example operation of the determination unit in production work.
[FIG. 8] It depicts a flowchart illustrating an example operation of the approval request unit in production work.
[FIG. 9] It depicts a flowchart illustrating an example operation of the control unit in production work.
[FIG. 10] It depicts a block diagram illustrating an overview of the information processing apparatus according to the present invention.
[FIG. 11] It depicts a block diagram illustrating an overview of the work error prevention system according to the present invention.

### Example Embodiment

First, a situation assumed in this example embodiment will be described. In the operation of an information system, it is occasionally necessary to change programs or settings or replace information equipment. However, if a mistake occurs during such work, it can often result in a failure in the services provided by the information system.

In today's information society, information systems serve as a backbone for society in a wide range of applications. Therefore, if a service failure occurs, it can cause serious disruptions and economic losses, such as the inability to withdraw money from bank accounts, the inability to use electronic money at retail stores, stoppage of train or flight operations, or halting of factory production.

Accordingly, preventing work errors during information system operation is an important issue in the industrial field. Various methods have been devised for this purpose, and several standard approaches have been established.

The first action generally taken is the creation of a "work procedure manual." In this manual, the work is broken down into step-by-step procedures, and the content of the work performed at each step is clarified in writing. Furthermore, methods for verifying that each step is executed correctly and the criteria for judging correctness are also clarified in the manual. The manual is reviewed and revised by multiple people to prevent work errors.

When operating an information system, most of the work is performed from the operator's terminal using mouse operations and keyboard input.

Alongside the manual creation, another concurrent activity is the "automation of work." Human error is more likely when performing complex tasks. Therefore, the complex parts of the procedures are automated to prevent errors. In information system operations, such automation is implemented by creating automation programs.

Next, "preliminary testing" using the created work procedure manual and automation programs is performed. In most cases, the work procedure manual is created through desk-based discussion. Therefore, when applied to the actual information system, errors or omissions in the procedures, verification methods, or criteria for correctness may arise.

However, it is unacceptable to cause a failure by directly applying the work to the actual information system, which serves as a critical infrastructure for society. Therefore, an information system similar to the actual information system is constructed in advance, and then preliminary test is conducted in which the operators who will be performing the work during the actual operation actually perform the tasks using the work procedure manuals and automation programs created on that system.

In the preliminary test, not only are errors or omissions in the work procedure manual or automation programs identified and corrected, but it is also important to verify whether the operator can correctly interpret the procedures described in the work procedure manual by text or illustrations and execute them without error.

After such preparations, the actual operation on the production information system is carried out, which is referred to as "production work." Even with these thorough preparations, mistakes can still occur during production work. Therefore, for the operation of critical information systems, a checker is assigned to each operator to review the work and verification results against the work procedure manual and approve the transition to the next step. This system is known as "double-checking." Ideally, the same checker who participated in the preliminary test is assigned to the production work and is familiarized with the contents of the work procedure manual.

Furthermore, in the preliminary test, it is often difficult to construct an information system that is completely identical to an actual information system, and slight differences will occur from the actual information system. As a result, slight differences between the preliminary test and the production environment may arise. These differences are usually addressed by modifying the descriptions in the work procedure manual or the settings of the automation programs between the preliminary test and production environments.

Among the common countermeasures, those excluding automation rely on organizational rules or human supervision. However, no matter how much they are improved, human errors are inevitable, and it is difficult to completely eliminate work errors through such measures alone.

Even when double-checking is employed, familiarity with the procedure may lead the operator to subconsciously skip their own checks, assuming the checker will catch any errors. Conversely, the checker may also subconsciously rely on the operator's diligence and perform less careful checks. Under such circumstances, work errors can still occur despite the double-checking.

In addition, many operations in information system management involve configuring multiple items on a single screen, and executing the reflection of those settings in the system by pressing an execute button with a mouse or the enter key on a keyboard. Specifically, the setting and reflection of multiple items may be performed in succession, but when multiple operations are performed consecutively, there is a risk of mistakes occurring that deviate from business rules.

Although automation using programs can prevent human error during manual operations, developing and verifying such automation programs involves significant time and cost. For example, even a manual operation that takes only two to three minutes may require several hours to develop an automation program, and additional time is needed to verify its correct operation.

Moreover, since the structure and programs of information systems vary individually, automation programs often become disposable - usable only for a single task.

From a business management perspective, while the goal of preventing work errors is accepted, unlimited time and budget cannot be justified. Therefore, creating such automation programs is typically limited to cases in which the same task is repeated many times. In other words, although automation is a powerful solution, its application is limited due to cost-effectiveness considerations.

Furthermore, discrepancies in the descriptions of the work procedure manual or the settings of automation programs between the preliminary test and the production work are major factors contributing to work errors during production. Mistakes or omissions may occur when making corrections for these discrepancies, and operators or checkers may fail to notice the differences and perform the tasks as they did in the preliminary test based on memory, leading to errors.

To address these challenges, in recent years, there are cases in which a confirmation program is used to verify whether the contents of manual inputs fall within allowable ranges. For example, when changing a setting in an information system, if the number of digits entered into a setting field is mistaken and the value is instantly applied, it can lead to a malfunction or halt in the system due to a work error.

To prevent such work errors, one approach involves predefining the allowable upper and lower limits for each configuration item in a confirmation program. In this approach, the confirmation program is interposed between the operator's terminal and the information system by some method, and it automatically verifies the input content entered by the operator.

However, the task of predefining the allowable upper and lower limits for each configuration item in the confirmation program is essentially equivalent to automating the visual confirmation task performed by the operator or checker. As a result, such automation requires a significant amount of time and cost. Furthermore, this automation is often applicable to only a one-time task, making the return on investment inadequate.

In view of these circumstances, the inventors have developed a technique capable of preventing work errors caused by human operations in advance. An example embodiment of the present invention will be described below with reference to the drawings.

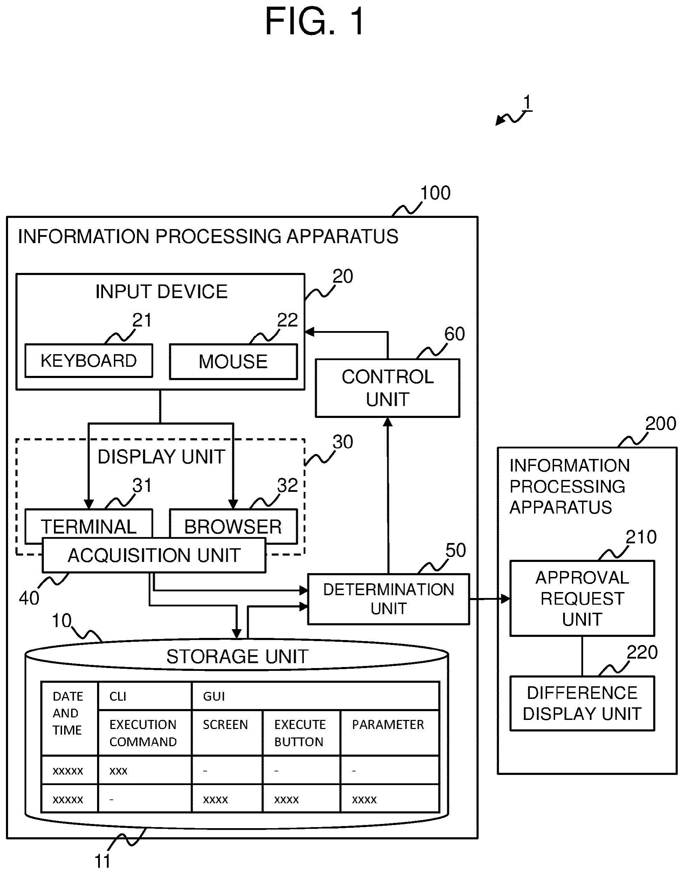

FIG. 1 is a block diagram illustrating a configuration example of a work error prevention system according to an example embodiment of the present invention. A work error prevention system 1 according to this example embodiment includes an information processing apparatus 100 and an information processing apparatus 200. In this example embodiment, the information processing apparatus 100 is used by an operator, and the information processing apparatus 200 is used by an approver who approves the work content performed by the operator.

In this example embodiment, the configurations of the information processing apparatus 100 and the information processing apparatus 200 are shown as different, but the configurations of the information processing apparatus 100 and the information processing apparatus 200 may also be the same. In that case, the information processing apparatus 100 may be implemented as a device that includes the configuration of the information processing apparatus 200. In the following description, to distinguish between the terminal devices, the information processing apparatus 100 may be referred to as "the one apparatus," and the information processing apparatus 200 may be referred to as "the other apparatus." The information processing apparatus 100 and the information processing apparatus 200 may be implemented by devices such as a personal computer (PC) or a tablet.

The information processing apparatus 100 includes a storage unit 10, an input device 20, a display unit 30, an acquisition unit 40, a determination unit 50, and a control unit 60. In this example embodiment, since the information processing apparatus 100 performs processing to prevent work errors with respect to input operations, the information processing apparatus 100 may also be referred to as a work error prevention apparatus. Note that the unidirectional arrows shown in FIG. 1 indicate the direction of information flow and do not exclude bidirectional communication.

The storage unit 10 stores information used by the information processing apparatus 100 of this example embodiment for various types of processing. Specifically, the storage unit 10 stores reference operations, which are preset standard operations (hereinafter referred to as "reference operations"). As illustrated in FIG. 1, the reference operations may be stored in the form of a database 11.

The reference operations are procedures that describe a series of expected operations, and for example, they may be operations performed in a preliminary test conducted in a test environment. The test environment refers to an environment that closely resembles the production environment and is executed prior to the production work, and it is generally different from the production environment. The reference operations may be created by a user or may be actual operations performed on the information processing apparatus 100 acquired by the acquisition unit 40 described below.

Furthermore, the content of the reference operations is arbitrary, as long as it is in a format that can be compared with user operations by the determination unit 50, which will be described later. Examples of reference operations include execution logs for terminals from preliminary test data or operation logs on a browser.

The input device 20 is a device that receives input operations from a user. Any device capable of detecting user input operations may be used as the input device 20. Examples of input devices 20 include pointing devices such as a mouse that specifies an operation position or area, and touch panels. Other examples include keyboards and pen tablets for character input. The input device 20 may also be a microphone for voice recognition.

In FIG. 1, a keyboard 21 and a mouse 22 are illustrated as examples of the input device 20. However, the input device 20 is not limited to the keyboard 21 and the mouse 22. The number of input devices 20 is also not limited to two; it may be one or three or more.

The display unit 30 visualizes the contents of an input operation (hereinafter, referred to as operation information) performed on the information processing device 100 via the input device 20. The display unit 30 may be implemented by a terminal 31 or a browser 32, for example. The display unit 30 is not limited to the terminal 31 or the browser 32 and may be implemented using any application. Also, the number of applications that realize the display unit 30 is not limited to two; it may be one or more than three.

The acquisition unit 40 acquires the contents of an input operation (i.e., operation information) performed on the information processing device 100 via the input device 20. The acquisition unit 40 may store the acquired operation information in the storage unit 10. The content of the operation information is arbitrary, and examples include execution logs from the terminal 31 and operation logs on the browser 32. The method by which the acquisition unit 40 acquires the operation information is arbitrary. For example, the acquisition unit 40 may use hardware or software such as a sniffer that monitors network packets. As the methods for acquiring operation information are widely known, detailed descriptions are omitted here.

The determination unit 50 determines differences between a newly input operation performed via the input device 20 and the reference operations. Specifically, the determination unit 50 determines the differences between a newly input operation and the reference operations based on a predefined execution operation as a trigger. The execution operation is an operation that triggers the information processing device 100 to execute some process, such as an operation for executing a process or an operation for confirming a process. Examples of execution operations include pressing the enter key on a terminal or pressing (clicking) an execute button on a browser.

The determination unit 50 notifies another apparatus (in this example embodiment, the information processing apparatus 200) of the content depending on the result of the difference determination. Specifically, if the predetermined threshold is exceeded (i.e., if a difference exceeding the threshold is determined), the determination unit 50 notifies a difference display unit 220 of the information processing apparatus 200, which will be described later, of content indicating that the threshold has been exceeded so that the content can be displayed. The predetermined threshold may be defined in advance by a user, depending on the reference operations, such as requiring exact matches or allowing partial differences.

The content notified by the determination unit 50 (specifically, content indicating that the threshold has been exceeded) is arbitrary. Examples include information indicating whether there is a difference or details of the difference.

The control unit 60, when it is determined by the determination unit 50 that the predetermined threshold is exceeded, restricts processing in response to input operations to the input device 20 until an approval instruction is received from the information processing apparatus 200 (specifically, an approval request unit 210). Then, in accordance with the approval instruction from the information processing apparatus 200, the control unit 60 releases the restriction on processing in response to input operations to the input device 20. In the example shown in FIG. 1, the control unit 60 restricts processing in response to input operations (specifically, execution operations) of the keyboard 21 and the mouse 22 until an approval instruction is received from the information processing apparatus 200.

The method for restricting processing in response to input operations is arbitrary, as long as it involves control content that can prevent work errors in advance. As the restriction, the control unit 60 may disable input operations and then cancel the disablement according to the approval instruction from the other apparatus. Alternatively, the control unit 60 may display a screen that holds the input operation in a pending state, and then cancel the display and pending state in accordance with the approval instruction from the other apparatus. Furthermore, the control unit 60 may disable input operations to a specific application.

The information processing apparatus 200 includes an approval request unit 210 and a difference display unit 220. As described above, the information processing apparatus 200 may include the configuration of the information processing apparatus 100.

The difference display unit 220 displays the notification content received from the information processing apparatus 100.

When the approval request unit 210 receives a notification from the information processing apparatus 100, it causes the received content to be displayed by the difference display unit 220. Then, based on the displayed content on the difference display unit 220, the approval request unit 210 detects an approval instruction made by a user operating the information processing apparatus 200 (i.e., the approver), and transmits the approval instruction to the information processing apparatus 100.

The display unit 30, the acquisition unit 40, the determination unit 50, and the control unit 60 are implemented by a processor (e.g., a CPU or GPU) of a computer operating according to a program.

For example, the program is stored in the storage unit 10 of the information processing apparatus 100. The processor may read and execute the program, thereby functioning as the display unit 30, the acquisition unit 40, the determination unit 50, and the control unit 60. The functions of the information processing apparatus 100 may also be provided in the form of Software as a Service (SaaS).

The display unit 30, the acquisition unit 40, the determination unit 50, and the control unit 60 may also be implemented as dedicated hardware. Some or all components of each unit of each apparatus may be implemented by general-purpose or dedicated circuitry, processors, or a combination thereof. These may be implemented as a single chip or multiple chips connected via a bus. Some or all components may also be implemented by a combination of such circuits and programs.

When some or all of the components of the information processing apparatus 100 are implemented by multiple information processing apparatuses or circuits, those apparatuses or circuits may be centrally or distributively deployed. For example, the system may be implemented in the form of a client-server system or a cloud computing system in which the individual elements are connected via a communication network.

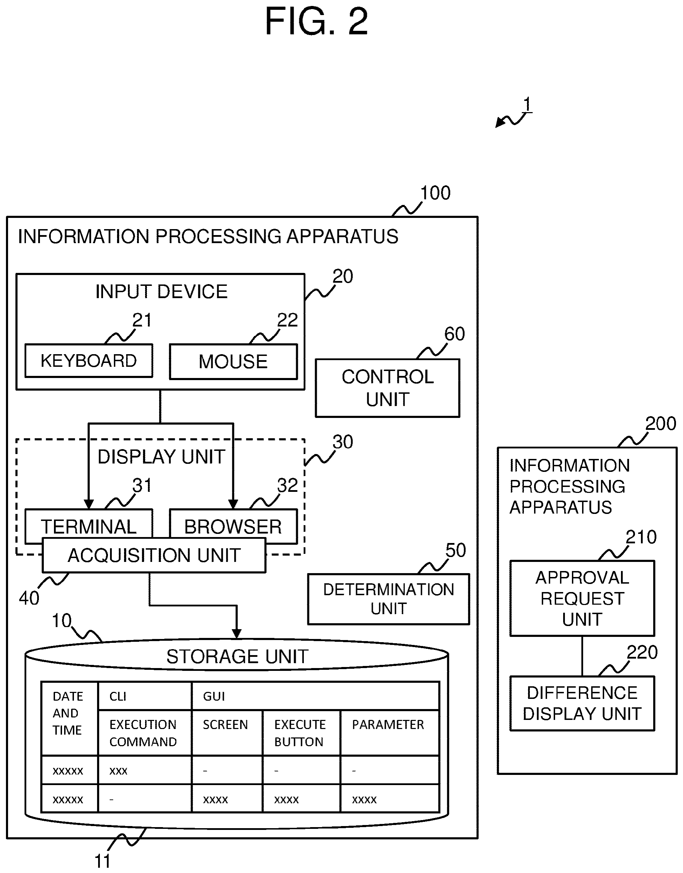

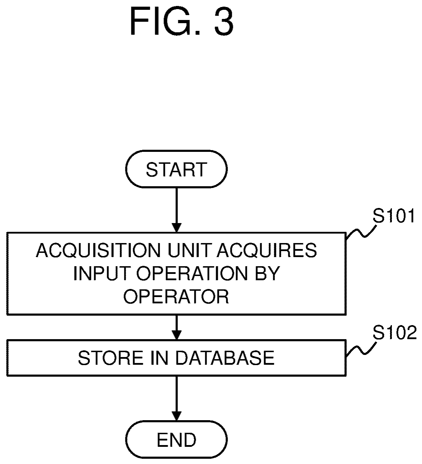

Next, the operation of the work error prevention system 1 of this example embodiment will be described. In the following explanation, input disabling is exemplified as the specific method of controlling input operations. As preparation, the registration process for input operations to the information processing apparatus 100 during the preliminary test (i.e., the registration process for the reference operations) will be described. FIG. 2 is an explanatory diagram illustrating an example configuration used in the registration process for reference operations. FIG. 3 is a flowchart illustrating an example operation of the registration process for reference operations.

As shown in FIG. 2, in this process, the acquisition unit 40 acquires the operation content displayed on the display unit 30 via the input device 20 and stores it in the storage unit 10. Specifically, before working in the production environment, the operator performs operations in a test environment equivalent to the production environment. First, the acquisition unit 40 (e.g., a sniffer) included in the information processing apparatus 100 collects the execution logs from the terminal 31 and the operation logs from the browser 32 (step S101 in FIG. 3), and stores them in the database 11 of the storage unit 10 (step S102).

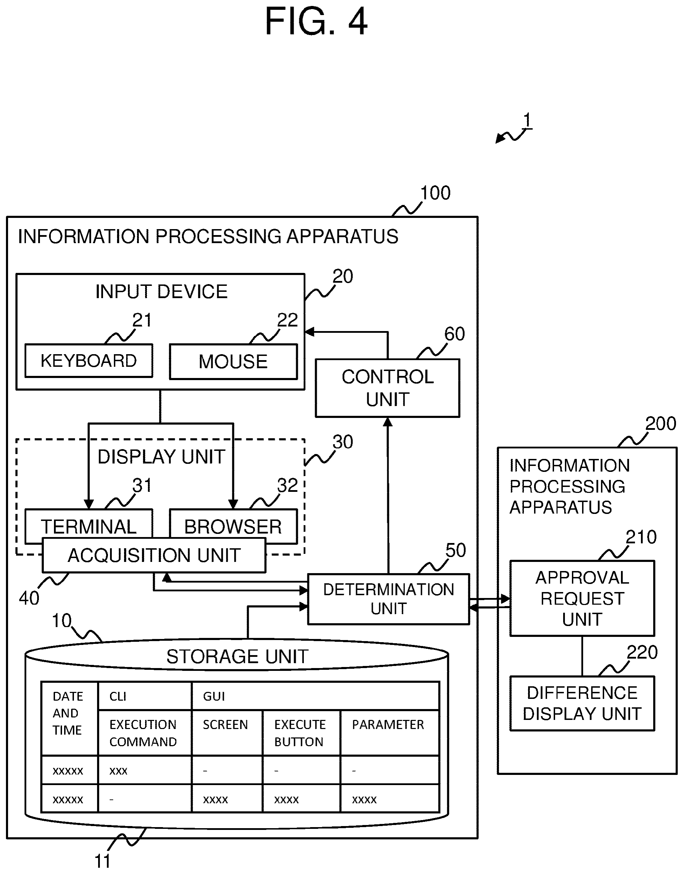

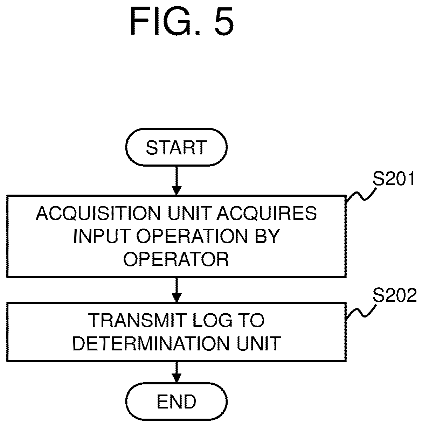

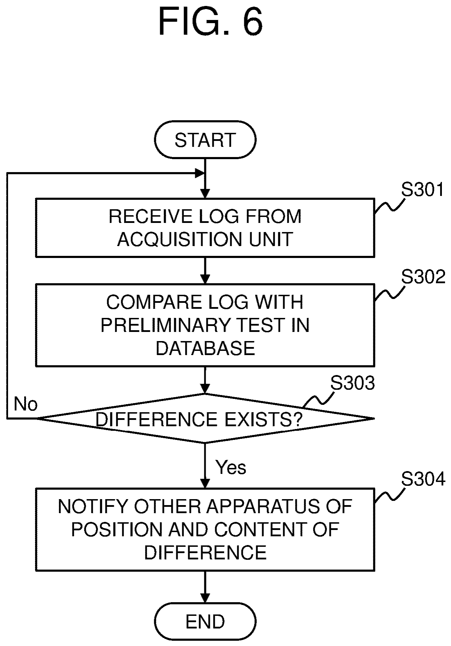

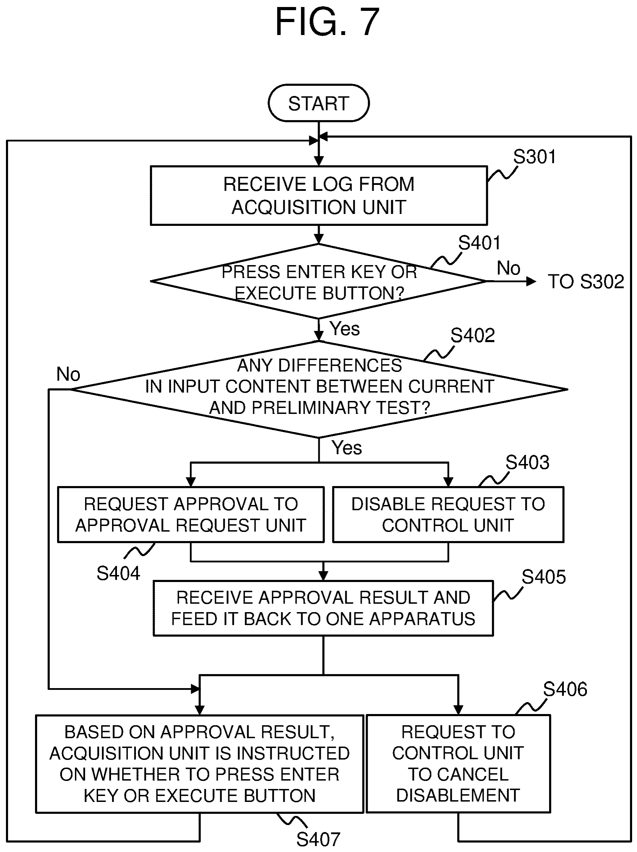

Next, the operations performed in the production environment will be described. FIG. 4 is an explanatory diagram illustrating an example configuration used in production work. FIG. 5 is a flowchart illustrating an example operation of the acquisition unit in production work. FIG. 6 and FIG. 7 are flowcharts illustrating example operations of the determination unit in production work. As shown in FIG. 4, the subsequent processes are realized by the overall configuration of the work error prevention system 1. In the following explanation, an example is given in which the input device 20 is implemented by the keyboard 21 and the mouse 22.

When the user begins input to the information processing apparatus 100 via the input device 20 according to the work procedure, the acquisition unit 40 collects the execution logs from the terminal 31 and the operation logs from the browser 32 as the operator's input operations in the production work (step S201 in FIG. 5) and transmits the logs to the determination unit 50 (step S202).

The determination unit 50 receives the logs indicating the input operations from the acquisition unit 40 (step S301 in FIG. 6) and compares the received logs with the reference operations at the time of the preliminary test stored in the database 11 (step S302). If no difference exists between the two (No in step S303), the processing from step S301 is repeated. On the other hand, if a difference is found (Yes in step S303), the determination unit 50 notifies the other apparatus (the information processing apparatus 200) of the location of the differences and the content of the difference (step S304).

Meanwhile, after receiving the logs indicating the input operations from the acquisition unit 40 (step S301 in FIG. 7), the determination unit 50 determines whether a predefined execution operation, such as pressing the enter key or an execute button, has been performed (step S401). If no execution operation has been performed (No in step S401), the processing from step S302 shown in FIG. 6 is performed.

On the other hand, if an execution operation has been performed (Yes in step S401), the determination unit 50 determines whether there is a difference between the current input content and the input content from the preliminary test (step S402). If no difference is found (No in step S402), the processing from step S302 in FIG. 6 is performed.

If a difference is found (Yes in step S402), the determination unit 50 sends a disable request to the control unit 60 for the keyboard 21 and the mouse 22 (step S403). Furthermore, the determination unit 50 sends an approval request to the approval request unit 210 of the information processing apparatus 200 (step S404).

When the approval result is received from the information processing apparatus 200, the determination unit 50 provides feedback of the approval result to the information processing apparatus 100 (the one apparatus) (step S405 in FIG. 7). Specifically, the determination unit 50 instructs the acquisition unit 40 whether pressing the enter key and the execute button is permitted, based on the approval result (step S407). Furthermore, the determination unit 50 sends a release request to the control unit 60 to cancel the disablement performed in step S403 (step S406).

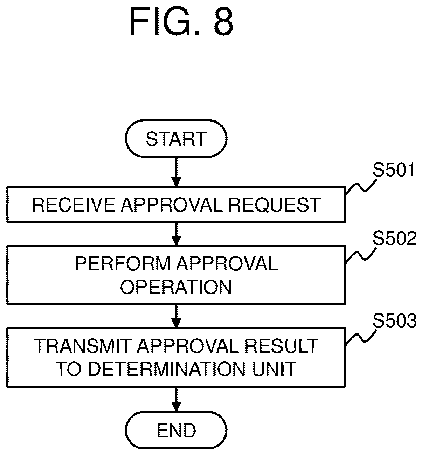

FIG. 8 is a flowchart illustrating an example operation of the approval request unit in production work. The approval request unit 210 receives the approval request sent in the process of step S404 shown in FIG. 7 (step S501). Based on the received content, the approval request unit 210 causes the difference display unit 220 to display a screen prompting the user to approve or not approve the continuation of the processing, requests approval from the user, and performs the approval operation (step S502). Once the approval result is determined, the approval request unit 210 transmits the approval result to the determination unit 50 of the information processing apparatus 100 (step S503).

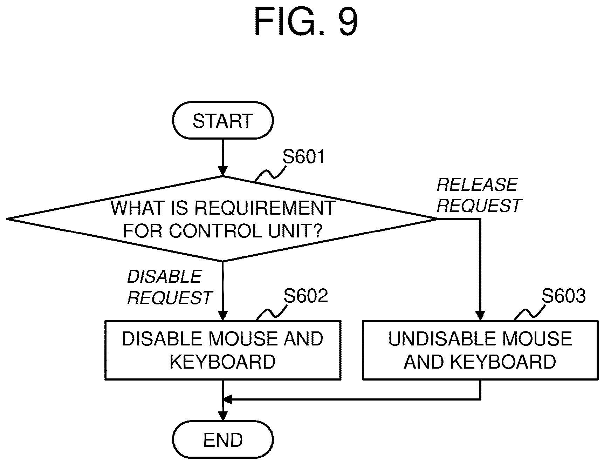

FIG. 9 is a flowchart illustrating an example operation of the control unit in production work. The control unit 60 determines whether the received request is a disable request sent in step S403 of FIG. 7 or a release request sent in step S406 (step S601).

If it is a disable request ("Disable Request" in step S601), the control unit 60 disables input operations from the keyboard 21 and the mouse 22 (step S602). If it is a release request ("Release Request" in step S601), the control unit 60 cancels the disablement of input operations from the keyboard 21 and the mouse 22 (step S603).

The processes illustrated in FIGS. 5, 6, 7, 8, and 9 are repeated to verify whether the work is being executed according to the procedure manual.

As described above, in this example embodiment, the acquisition unit 40 acquires operation information. Based on the newly input operation and the reference operation, when a predetermined threshold is exceeded, the determination unit 50 notifies the information processing apparatus 200 of content indicating that a predetermined threshold has been exceeded, and the control unit 60 restricts processing in response to input operations to the input device 20 until an approval instruction is received from the information processing apparatus 200. Then, the control unit 60 releases the restriction on the processing in response to input operations to the input device 20 according to the approval instruction from the information processing apparatus 200. Accordingly, it is possible to prevent work errors caused by human operations in advance.

For example, in the operation of an information system, the movement of the mouse 22, keystroke logs from the keyboard 21, and input locations of characters during the preliminary test are stored as data. Then, during production work, the determination unit 50 refers to the stored data and compares it with the operation currently being performed by the operator, presenting any differences to the operator or approver. When the content input from the mouse 22 or keyboard 21 on the operator's information processing apparatus 100 is to be applied to the information system, the control unit 60 intercepts the application instruction message (specifically, the execution operation) from the operator on the path from the operator's information processing apparatus 100 to the information system. The approval request unit 210 displays an approval screen on the difference display unit 220 of the approver's information processing apparatus 200, and when the approver grants approval, the control unit 60 transmits the above message to the information system, thereby applying the process.

Here, since preliminary testing is already a standard practice in operational management to reduce work errors, acquiring data does not require additional time or cost. Moreover, the work error prevention program of this example embodiment (i.e., a program that stores input operations during work as data and displays the differences when compared with production work) does not need to be created for each individual information system. Therefore, it provides a cost-effective solution. In addition, the approval request unit 210 in this example embodiment encourages caution by presenting the differences between the preliminary test and production work to the approver, thereby enabling the reduction of work errors.

Furthermore, when using a conventional method, there is still the possibility of mistakes occurring that deviate from business rules, such as an operator setting multiple items and then performing operations to reflect the changes without waiting for approval from the checker. In contrast, in this example embodiment, since the determination unit 50 and the control unit 60 intercept the operator's application instruction message and send it to the target information system only after the approver has confirmed it, work errors can be prevented in advance.

Although differences between the preliminary test and the production work may lead to operational differences, in this example embodiment, the information processing apparatus 100 merely detects the differences and presents them to the operator or approver. It does not require manual correction of data to absorb the differences. Moreover, even if the detected differences are due to changes between the preliminary test and production work, they can still be critical causes of work errors. In this embodiment, since the approval request unit 210 alerts the approver by presenting the differences, it is possible to reduce work errors.

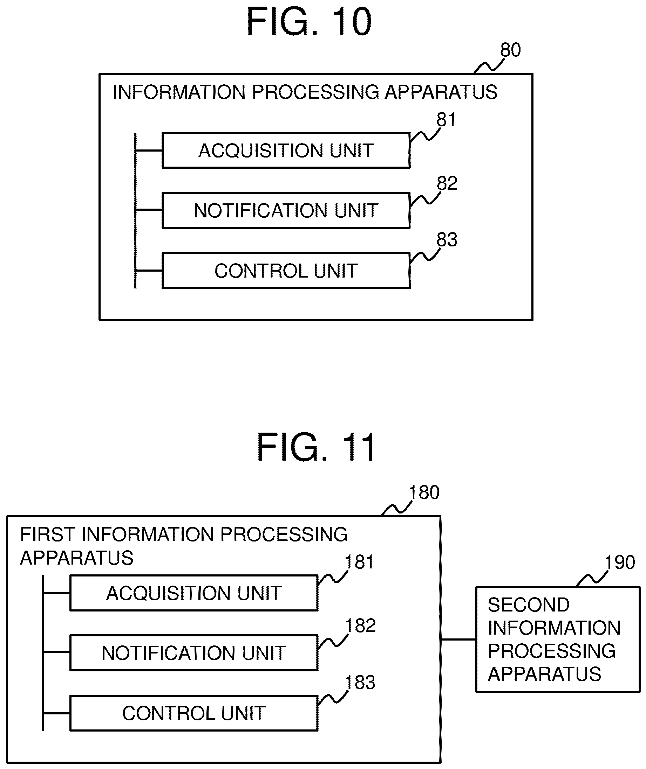

Next, an overview of the present invention will be described. FIG. 10 is a block diagram illustrating the outline of a work error prevention apparatus according to the present invention. An information processing apparatus 80 according to the present invention (e.g., the information processing apparatus 100) includes: an acquisition unit 81 (e.g., the acquisition unit 40) that acquires operation information indicating the content of input operations (e.g., mouse 22 movement or keystroke logs from the keyboard 21) performed via an input device (e.g., the input device 20); a notification unit 82 (e.g., the determination unit 50) that, based on a newly input operation and a reference operation that serves as a preset standard operation, notifies another apparatus (e.g., the information processing apparatus 200) of content indicating that a predetermined threshold has been exceeded when the threshold is exceeded; and a control unit 83 (e.g., the control unit 60) that restricts processing in response to input operations to the input device until an approval instruction is received from the other apparatus when the threshold is exceeded.

The control unit 83 then releases restriction on the processing in response to input operations to the input device according to the approval instruction from the other apparatus.

With such a configuration, work errors caused by human operations can be prevented in advance.

The information processing apparatus 80 may further include a determination unit (e.g., the determination unit 50) that determines differences between the newly input operation and the reference operation. The notification unit 82 may notify the other apparatus of content of the difference when it is determined that the difference exceeds a predetermined threshold. The control unit 83 may restrict processing in response to input operations to the input device until an approval instruction is received from the other apparatus when it is determined that the difference exceeds the predetermined threshold.

The control unit 83 may disable the input operations as the restriction on the processing in response to input operations to the input device, and cancel disablement according to the approval instruction from the other apparatus.

The determination unit may determine the difference between the input operation and the reference operation when a predefined execution operation is acquired as the operation information. The control unit 83 may disable the execution operation when it is determined that the difference exceeds the predetermined threshold. With this configuration, processing can be interrupted before a message is transmitted to the information system, thus allowing work errors to be prevented in advance.

Specifically, the determination unit may determine the difference between the input operation and the reference operation when an enter key press operation on a terminal or a click operation on an execution button in a browser is acquired as the execution operation. By determining the difference in response to such an operation, it becomes easier for the user to grasp the points for which the system is determining the difference.

The work error prevention apparatus 80 may also include a storage unit (e.g., the storage unit 10) that stores reference information. The acquisition unit 81 may store the acquired operation information in the storage unit, and the determination unit 82 may use the operation information stored in the storage unit as the reference operations to determine the difference from the newly input operation. With such a configuration, the operation information used for actual comparison can be automatically generated.

Specifically, the acquisition unit 81 may store operation information from a test environment in the storage unit as the reference operation. The determination unit 82 may determine a difference between an input operation in a production environment and the reference information. This configuration makes it possible to understand the differences between the test environment and the production environment.

FIG. 11 is a block diagram illustrating an overview of the work error prevention system according to the present invention. The work error prevention system (e.g., the work error prevention system 1) according to the present invention includes a first information processing apparatus 180 (e.g., the information processing apparatus 100) and a second information processing apparatus 190 (e.g., the information processing apparatus 200) that receives information from the first information processing apparatus 180.

The first information processing apparatus 180 includes: an acquisition unit 181 (e.g., the acquisition unit 40) that acquires operation information indicating the content of input operations (e.g., mouse 22 movement, keystroke logs from keyboard 21, etc.) performed via an input device (e.g., the input device 20); a notification unit 182 (e.g., the determination unit 50) that, based on a newly input operation and a reference operation that serves as a preset standard operation, notifies the second information processing apparatus 190 of content indicating that a predetermined threshold has been exceeded when the threshold is exceeded; and a control unit 183 (e.g., the control unit 60) that restricts processing in response to input operations to the input device until an approval instruction is received from the second information processing apparatus 190 when the threshold is exceeded.

The control unit 183 then releases restriction on the processing in response to input operations to the input device according to the approval instruction from the second information processing apparatus 190.

Even with such a configuration, work errors caused by human operations can be prevented in advance.

### Industrial Applicability

The present invention is suitably applicable to a work error prevention apparatus that prevents work errors caused by human operations. Specifically, regardless of industry or type of work, the present invention is suitably applicable to the operation of various information systems that support society.

While the present invention has been particularly shown and described with reference to example embodiments and examples thereof, the present invention is not limited to these example embodiments and examples. It will be understood by those of ordinary skill in the art that various changes in form and details may be made therein without departing from the spirit and scope of the present invention as defined by the claims.

This application is based upon and claims the benefit of priority from Japanese patent application No. 2023-036303, filed on March 9, 2023, the disclosure of which is incorporated herein in its entirety by reference.

### Reference Signs List

- 1: Work error prevention system
- 10: Storage unit
- 11: Database
- 20: Input device
- 21: Keyboard
- 22: Mouse
- 30: Display unit
- 31: Terminal
- 32: Browser
- 40: Acquisition unit
- 50: Determination unit
- 60: Control unit
- 100, 200: Information processing apparatus

## Claims

1. An information processing apparatus comprising:
an acquisition unit that acquires operation information indicating content of an input operation performed via an input device;
a notification unit that, based on the newly input operation and a reference operation that serves as a preset standard operation, notifies another apparatus of content indicating that a predetermined threshold has been exceeded when the threshold is exceeded; and
a control unit that restricts processing in response to input operations to the input device until an approval instruction is received from the other apparatus when the threshold is exceeded,
wherein the control unit releases restriction on the processing in response to input operations to the input device according to the approval instruction from the other apparatus.

2. The information processing apparatus according to claim 1,
wherein the control unit disables the input operation as the restriction on the processing in response to input operations to the input device, and cancels disablement according to the approval instruction from the other apparatus.

3. The information processing apparatus according to claim 1 or 2, further comprising:
a determination unit that determines a difference between the newly input operation and the reference operation,
wherein the notification unit notifies the other apparatus of content of the difference when it is determined that the difference exceeds a predetermined threshold, and
the control unit restricts processing in response to input operations to the input device until an approval instruction is received from the other apparatus when it is determined that the difference exceeds the predetermined threshold.

4. The information processing apparatus according to claim 3,
wherein the determination unit determines the difference between the input operation and the reference operation when a predefined execution operation is acquired as the operation information, and
the control unit disables the execution operation when it is determined that the difference exceeds the predetermined threshold.

5. The information processing apparatus according to claim 4,
wherein the determination unit determines the difference between the input operation and the reference operation when an enter key press operation on a terminal or a click operation on an execute button in a browser is acquired as the execution operation.

6. The information processing apparatus according to any one of claims 3 to 5, further comprising a storage unit that stores reference information,
wherein the acquisition unit stores the acquired operation information in the storage unit, and
the determination unit uses the operation information stored in the storage unit as the reference operation to determine the difference from the newly input operation.

7. The information processing apparatus according to claim 6,
wherein the acquisition unit stores operation information from a test environment in the storage unit as the reference operation, and
the determination unit determines a difference between an input operation in a production environment and the reference information.

8. A work error prevention system comprising:
a first information processing apparatus; and
a second information processing apparatus that receives information from the first information processing apparatus,
wherein the first information processing apparatus includes:
an acquisition unit that acquires operation information indicating content of an input operation performed via an input device;
a notification unit that, based on the newly input operation and a reference operation that serves as a preset standard operation, notifies the second information processing apparatus of content indicating that a predetermined threshold has been exceeded when the threshold is exceeded; and
a control unit that restricts processing in response to input operations to the input device until an approval instruction is received from the second information processing apparatus when the threshold is exceeded,
wherein the control unit releases restriction on the processing in response to input operations to the input device according to the approval instruction from the second information processing apparatus.

9. An information processing method comprising:
acquiring operation information indicating content of an input operation performed via an input device;
notifying another apparatus of content indicating that a predetermined threshold has been exceeded when the threshold is exceeded, based on the newly input operation and a reference operation that serves as a preset standard operation;
restricting processing in response to input operations to the input device until an approval instruction is received from the other apparatus when the threshold is exceeded; and
releasing the restriction on processing in response to input operations to the input device according to the approval instruction from the other apparatus.

10. A program storage medium storing a program for causing a computer to execute:
an acquisition process that acquires operation information indicating content of an input operation performed via an input device;
a notification process that, based on the newly input operation and a reference operation that serves as a preset standard operation, notifies another apparatus of content indicating that a predetermined threshold has been exceeded when the threshold is exceeded; and
a control process that restricts processing in response to input operations to the input device until an approval instruction is received from the other apparatus when the threshold is exceeded,
wherein the control process releases the restriction on the processing in response to input operations to the input device according to the approval instruction from the other apparatus.
